# EUROPEAN PATENT SPECIFICATION

(11) **EP 0 739 861 B1**
(45) Date of publication and mention of the grant of the patent: **18.07.2001**
(21) Application number: 96105565.4
(22) Date of filing: 09.04.1996
(51) Int. Cl.: C03B 5/42

(54) **Method for repairing glass-melting furnaces**
Verfahren zum Reparieren eines Glasschmelzofens
Procédé de réparation d'un four de fusion de verre

(30) Priority: 26.04.1995 IT TV950048
(43) Date of publication of application: 30.10.1996
(73) Proprietor: FOSBEL INTERNATIONAL LIMITED, Swindon, Wiltshire SN3 1RE (GB)
(72) Inventor: Favretto, Enrico, Laiguelia (IT)
(74) Representative: Modiano, Guido, Dr.-Ing.

(56) References cited:
- US-A- 2 284 797
- GLASS INDUSTRY, vol. 63, no. 8, August 1982, NEW YORK, pages 16-39, XP002004051 E.PLUMAT: "hot repair o glass furnaces"
- CERAMIC ENGINEERING AND SCIENCE PROCEEDINGS, vol. 10, no. 3/4, 1989, WESTERVILLE,USA, pages 363-385, XP000007158 P.ROBYN&P.DESCHEPPER: "the evolution of the ceramic welding process fo the repair and maintenance of glass furnaces"
- GLASS INDUSTRY, vol. 63, no. 8, August 1982, NEW YORK, pages 16-39, XP002004051 E.PLUMAT: "hot repair of glass furnaces"
- CERAMIC ENGINEERING AND SCIENCE PROCEEDINGS, vol. 10, no. 3/4, 1989, WESTERVILLE,USA, pages 363-385, XP000007158 P.ROBYN&P.DESCHEPPER: "the evolution of the ceramic welding process for the repair and maintenance of glass furnaces"

## Description

The present invention relates to the method for repairing furnaces, particularly those adapted for melting glass.

Furnaces are currently known inside which glass is melted; their maintenance entails very high intervention costs.

Glass, in its motion inside the furnace, in fact causes erosion of the refractory material that can also lead to its perforation, with consequent pouring of the molten glass into an appropriately provided containment tank located below the furnace.

When the erosion affects the walls of the tank, made of electro-cast material, especially at the glass level region, plates are inserted in these eroded regions at the operating temperature.

This method has some drawbacks: either the plates, superimposed on the refractory, are unable to cover the eroded regions completely, leaving hollows that facilitate further rapid erosion, or they cover regions of the furnace that are still in good condition, which are subjected to accelerated wear because they are no longer cooled.

In both cases, the life of the furnace is limited considerably, forcing the user to face considerable costs for dressing or rebuilding the furnace.

Furthermore, since the furnace is constituted by layers of electro-cast refractory material with underlying layers of insulating refractory; said electro-cast refractory undergoes considerable erosion without externally giving any kind of visual indication, such as for example reddening, which might indicate the reduction of its thickness; this occurs because the electro-cast refractory is masked by the underlying insulating layers, which are not adapted to support without the electro-cast refactory layer, the overlying mass of glass.

Accordingly, sudden leaks of molten glass can occur, and this is considerably dangerous for the safety of the personnel assigned to the routine control of said furnaces, and for the safety of the personnel that will be called upon to attempt to plug the opening.

Such leaks of molten glass can of course be unstoppable and it is often necessary to resort to the intervention of firemen, who try to stop the outflow of glass by means of water jets.

It is often insufficient to plug the leak: for an adequate repair, it is inevitably necessary to cool down the furnace, with the consequences described hereinafter, and to return it to its operating temperature, after the intervention of the firemen, in order to be able to empty it completely and proceed with conventional repairs.

In view of the fact that the intact walls may also be damaged during such rapid cooling, the conventional repair often entails complete dressing or rebuilding of the furnace, entailing considerable investment costs as well as losses caused by lack of production.

Furthermore, when the furnace is cooled, the temperature reduction causes thermal contraction of the refractories and therefore the need to recover their expansion by actuating appropriately provided traction elements; however, this operation must be performed manually.

Restoring the temperature inside the furnace of course entails having to subsequently loosen said traction elements gradually.

Repairing the bottom of the furnace when hot is practically impossible, owing to the difficulty in accessing the damaged regions from outside, even when the tank is completely empty, due to the beams that support said tank and to the large number of insulating layers, and owing to the impossibility of mating the new parts with the old ones to ensure perfect tightness to eliminate the possibility of further uncontrolled leaks of molten glass.

The use of mortars applied inside the furnace, which is kept at the operating temperature, has also been unsuccessful, since said mortars, if sprayed or applied to the refractory at the temperature of the furnace, pulverize without being able to form a compact mass and moreover contaminate the glass that is subsequently produced in said furnace; the components of the mortar, which are dissociated due to of its pulverization, can in fact associate with the components that are introduced to form the glass, thus leading to the formation of unwanted compounds (known as infusibles).

Some types of material for the hot repairing of furnaces are also known which do not have the drawback of leaving unwanted residues; however, these materials are used in structures, such as for example runners or channels, that have a small size and are easy to inspect.

From THE GLASS INDUSTRY, vol. 63, no. 8, August 1982, New York; pages 16-39; E. PUMAT: "Hot repair of glass furnaces", there is known a conventional method for repairing glass melting furnaces which comprises the steps of: unloading the molten glass at a temperature that is close to the melting temperature of glass; inspecting the inside of the furnace while keeping the furnace at a high temperature for draining the molten glass; exposing the eroded regions; and placing refractory replacement material in the eroded regions before restarting the furnace.

An aim of the present invention is to solve the described technical problems, eliminating the drawbacks of the prior art, by providing a method for repairing furnaces that allows to perform optimum repairs of the damaged regions and avoid the problems arising from any cooling of the furnace.

Within the scope of this aim, an object is to provide a method that allows repairs to be performed in a short time, allowing to resume production quickly.

Another important object is to provide a process that allows to avoid the formation of granules or bubbles.

Another important object is to provide a method that can be localized exclusively to the eroded regions, allowing to keep the intact regions unchanged.

Another object is to provide a method that allows to restart said furnace, with immediate return to production, directly after completing the intervention.

Another object is to provide a method that allows to check the general state of wear of the tank, below the normal level of the glass, allowing to schedule subsequent intervention in relation to the production requirements and goals.

Another important object is to provide a method that is simple to perform and has low manufacturing costs.

With this aim, and these and other objects in view, there is provided a method for repairing glass-melting furnaces, which comprises the following steps:
a) unloading the molten glass at a temperature that is close to the melting temperature;
b) monitoring the inside of the furnace, keeping said furnace at a medium-to-high temperature to facilitate draining of the molten glass, possibly by means of suitable core holes for draining;
c) flushing the worn regions, with appropriate first nozzles, with sodium sulphate or other material that is suitable to melt the glass residues;
d) reducing the furnace temperature to 1150-1450 °C;
e) localized cooling only of the eroded region or regions to be repaired;
f) possible placement of refractory to delimit said eroded regions and possible closure of core holes for draining or of openings;
g) applying small contiguous layers of liquid rammed lining, with superimposition until said eroded regions to be repaired are levelled, with the possible addition of fragmented refractory having a preset fragment size;
h) restarting the furnace, brought to the melting temperature.

Advantageously, in order to repair inner lateral regions of said furnace, one proceeds according to steps a), b), c), d), e) indicated above, followed by step f), which provides for the positioning, on the inner wall of the furnace, in the eroded region, of a box-like support, that is rimmed with ceramic fiber and cooled constantly, said step f) being followed by steps g) and h) indicated above.

Further characteristics and advantages of the invention will become apparent from the description of a preferred embodiment of the method for repairing furnaces, which is illustrated only by way of non-limitative example in the accompanying drawings, wherein:

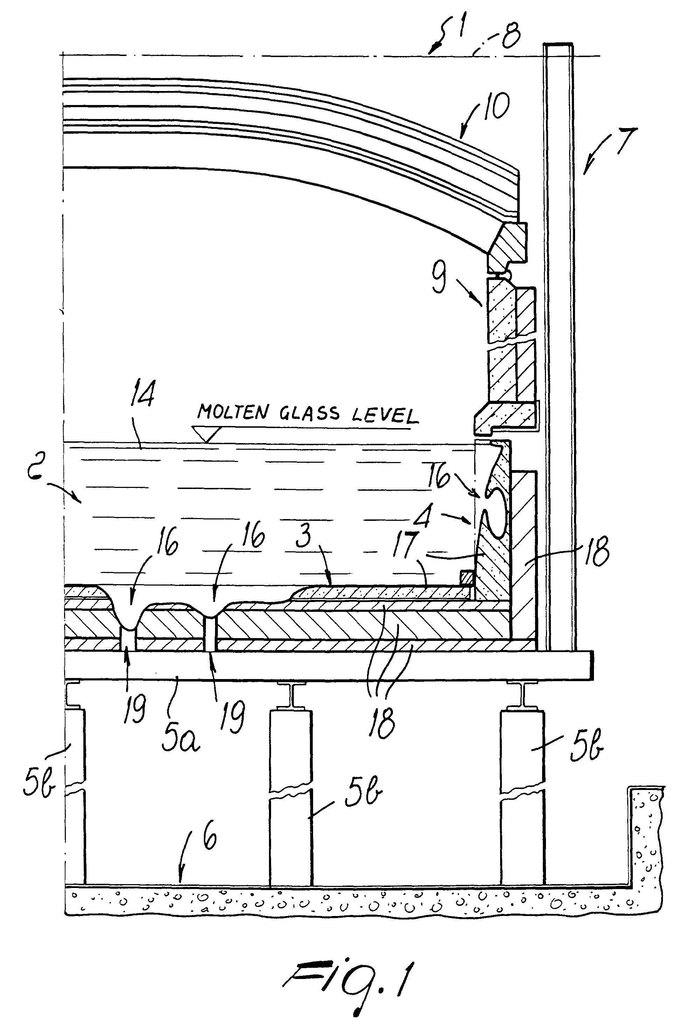

figure 1 is a transverse sectional view of the furnace with adapted core holes already formed;

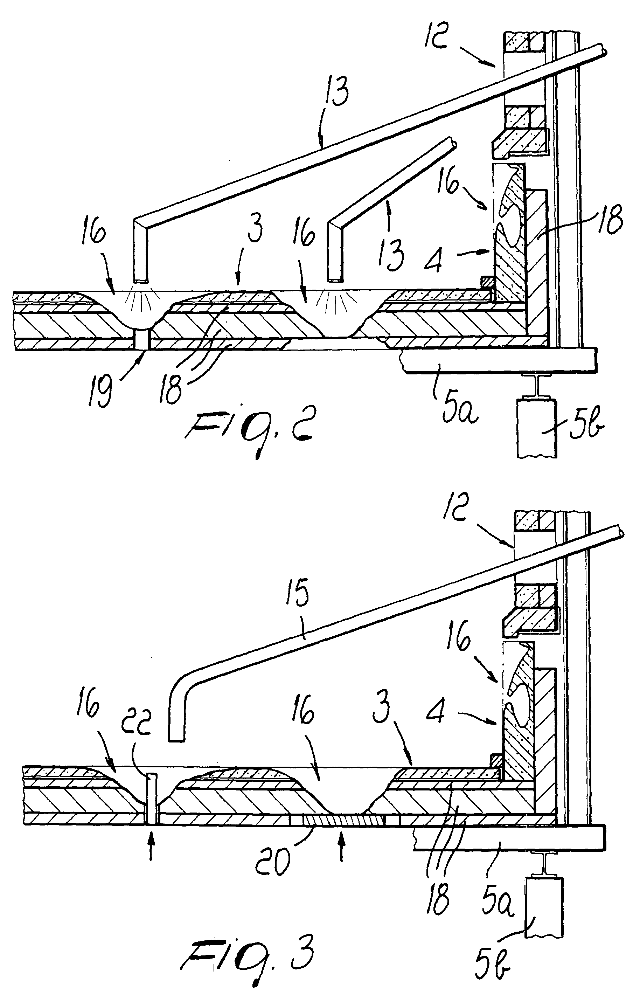

figure 2 is a transverse sectional view of the furnace, with the first nozzles, provided for flushing the eroded regions, inserted therein;
figure 3 is a sectional view, similar to figure 2, of the furnace, in which the draining core holes and the openings have been closed;

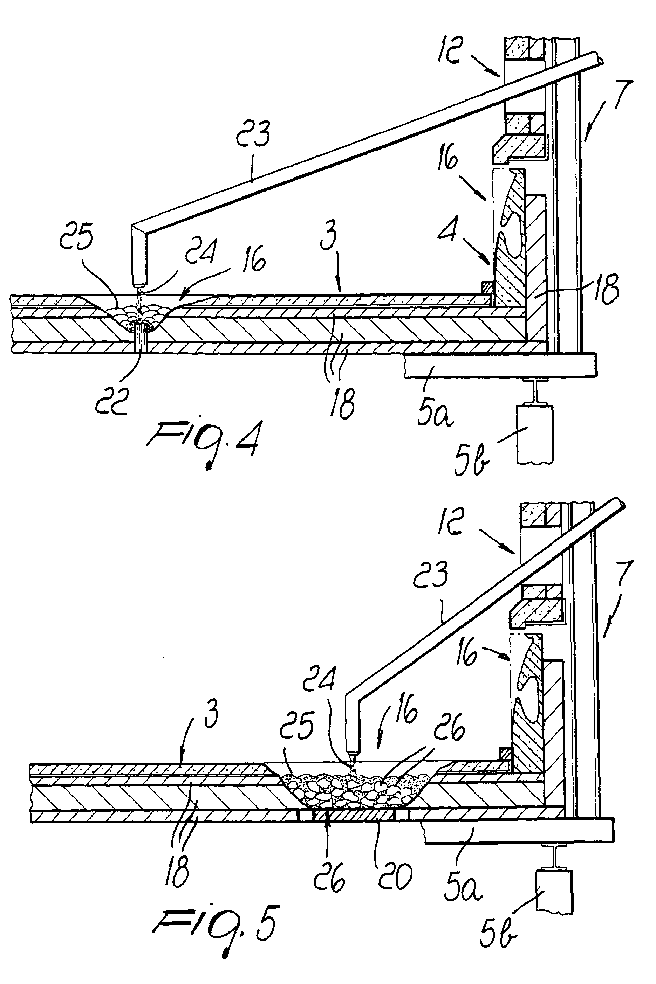

figure 4 is a view, similar to figure 2, of the arrangement of a liquid rammed lining;
figure 5 is a view, similar to figure 4, with the addition of pieces of refractory material in the eroded region;

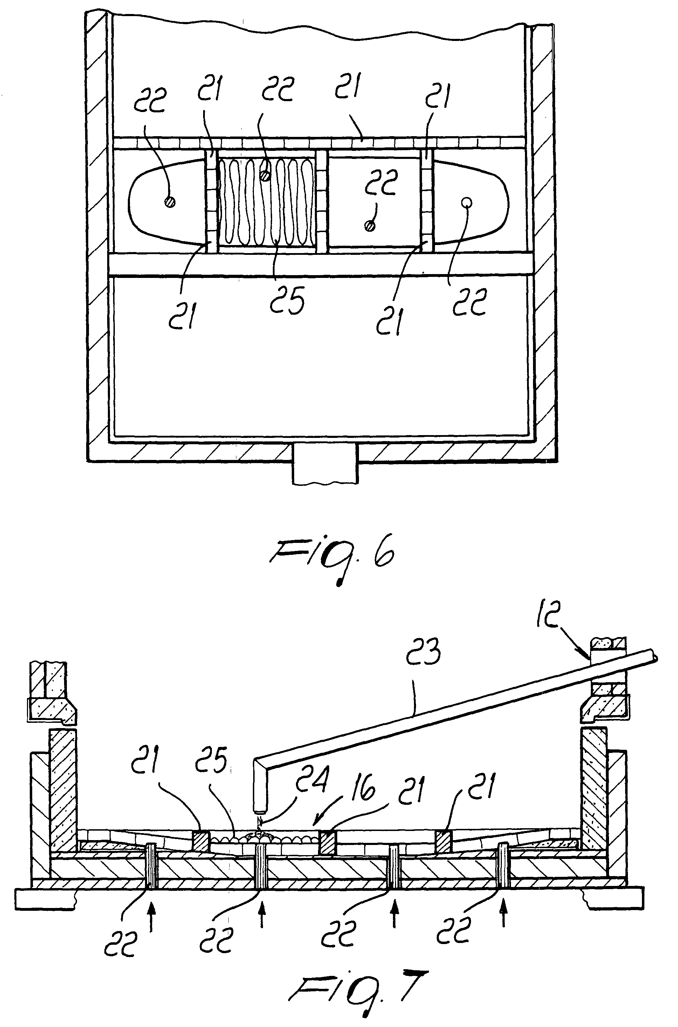

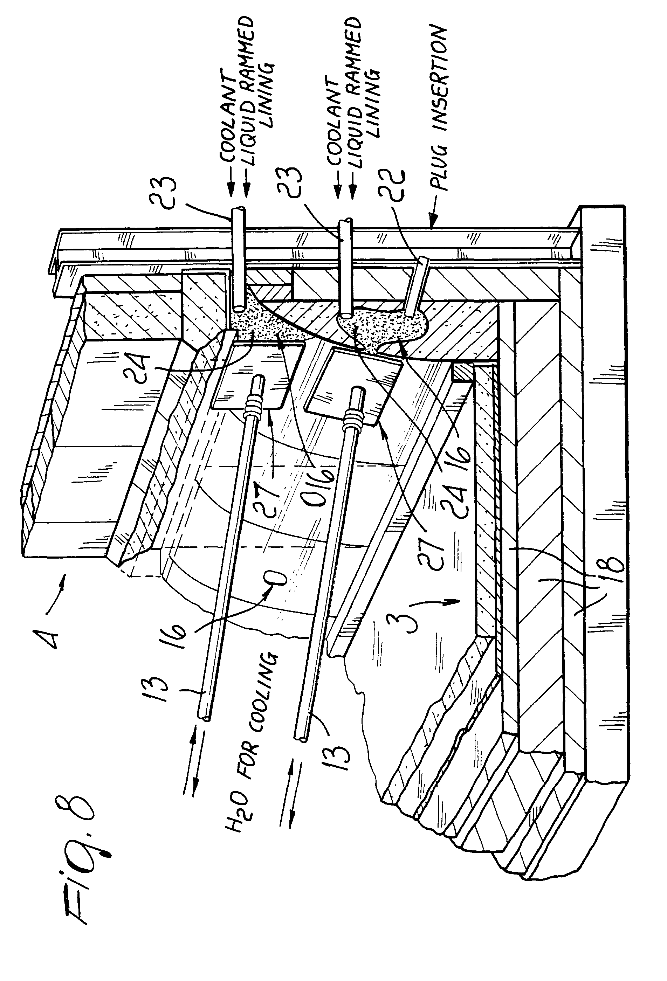

figure 6 is a partial top sectional view of the bottom of the furnace, with the arrangement of refractory to delimit the eroded regions;
figure 7 is a partially sectional front view of figure 6, with the nozzle for placing the liquid rammed lining;
figure 8 is a lateral perspective view of a part of the wall of the furnace of figure 1, with the arrangement of the box-like support and the completed core.

With reference to the above figures, the glass-melting furnace is designated by the reference numeral 1 and has a first tank 2, which comprises a flat bottom 3 from which a first side wall 4 extends.

The flat bottom 3 is supported, in a downward region, by a supporting structure that is formed by means of crossmembers 5a and pillars 5b.

An appropriate second containment tank 6, adapted to contain any leaks of liquid glass 14, is built below the furnace.

The cross-member 5a also supports, at its two ends, a post 7 between which a traction element 8 is associated at the upper end.

The furnace 1 has, above the first side wall 4, a second insulated wall 9, above which a vault 10 is arranged.

The second insulated wall 9 also has openings 12 that allow the insertion of first nozzles 13 for the pressurized conveyance of water and the flushing of the flat bottom 3 and of the first side wall 4.

The first tank 2 of the furnace 1 is adapted to contain the components for the production of the glass 14.

The flat bottom 3 and the first side wall 4 are constituted by a layer of electro-cast refractory material 17, with which underlying layers of insulating refractory material 18 are associated.

When it is necessary to repair the tank 2, and thus repair any eroded regions 16, it is first of all necessary to unload the molten glass 14 that is contained therein; the method consists in executing this unloading at a temperature that is close to the melting temperature of the glass.

To facilitate and quicken the draining of the molten glass 14, one or more core holes 19 are formed in adapted regions of the flat bottom 3, for example at the eroded regions 16; said core holes allow to convey the molten glass 14 into the appropriately provided underlying second tank 6.

Once the first tank 2 has been emptied, it is possible to insert, through the appropriately provided openings 12, instruments such as for example endoscopes 15 to monitor said first tank 2.

This operation, too, is performed while keeping the internal temperature of the furnace 1 at medium-to-high values.

This monitoring allows to identify the region 16 that is eroded or otherwise damaged by the glass 14, and also allows to check whether draining has occurred completely or if any internal hollows have remained filled with molten glass.

At this point it is possible to insert the first nozzles 13 through the openings 12 to flush the eroded region or regions 16.

To increase the effectiveness of the flushing action, material such as sodium sulphate (Na₂SO₄) or other similar material is introduced in said first nozzles 13, allowing to lower the melting temperature of the glass 14, facilitating its removal because its fluidity is increased.

After the complete flushing of the eroded region 16 it is possible to perform a slight reduction of the internal temperature of the furnace, to values between 1150-1450°C, in order to facilitate repair work and contain fuel consumption.

The thermal expansion that the furnace 1 must withstand at this temperature is in fact practically nonexistent; moreover, this temperature allows, at the end of the intervention, immediate return of the furnace 1 to the operating temperature.

By using the first nozzles 13, a cooling action limited to the eroded region 16 is performed with air or water; said region is preferably not larger than one square meter.

The same first nozzles 13 used in the previous operation are used for this operation; however, this time they are connected to a supply of water or compressed air.

In order to delimit the eroded region 16, refractory material 21 is arranged perimetrically around it.

If the eroded region 16 is very deep, considerably affecting the insulating refractory material 18, it is convenient to form a core hole which is then closed by inserting, from outside, cores 22 made of refractory or appropriate plates 20, both of conventional type.

At this point, while always keeping the temperature inside the furnace 1 at a medium-to-high level, liquid rammed lining 24 (for example ZIRMUL 160 : PATCH REFRACTORY AZS supplied by O. BITOSSI Srl of ARDENZA, Italy) is applied by using a second nozzle 23.

Said liquid rammed lining 24 must be placed in small layers 25 that are mutually superimposed until said eroded regions 16 are levelled.

If the eroded region 16 is particularly deep, so as to require a considerable addition of liquid rammed lining 24, fragmented electro-cast refractory material 26 having a preset fragment size is inserted, and liquid rammed lining 24 in small layers 25 is then applied.

The insertion of said electro-cast fragmented material 26 occurs by using appropriate blades of conventional type which are water-cooled and are not shown in the figure.

It has been observed that the optimum fragment size to be used for the fragmented electro-cast refractory material 26 is between two and six centimeters.

The sequential application of small layers 25 of liquid rammed lining 24 allows the evaporation of the water that is present in the layer inserted in the eroded region 16 prior to the application of the following layer.

This method allows to avoid any subsequent damage, since the water might produce cracks and consequent breakages or hollows might occur.

Once all the eroded regions 16 have been levelled, the furnace 1 is restarted, returning it to the melting temperature and inserting in the tank 2, thus repaired, all the components required to form the molten glass 14.

If the eroded region 16 is located on the first side wall 4 of the tank 2, it is necessary to perform the glass discharge step, the wall monitoring step, the step for flushing with the appropriately provided first nozzles 13 with the addition of sodium sulphate, the lowering of the temperature of the furnace 1, and the localized cooling of the eroded region 16, as described previously; at this point it is necessary to place a box-like support 27, associated with the first nozzle 13, inserting it inside the furnace 1 adjacent to the eroded region 16.

Said box-like support 27 is water-cooled and allows to contain the liquid rammed lining 25 that is applied from the outside of the first side wall 4 by using the second nozzles 23.

The box-like support 27 has a perimetrically arranged rim of ceramic fiber that is adapted to ensure its tightness with respect to the first side wall 4.

Then small overlapping and contiguous amounts of liquid rammed lining 24 are applied until the eroded region 16 is completely levelled.

At this point it is possible to restart the furnace, returning it to the glass melting temperature.

It has been observed that the method thus conceived has achieved the intended aim and objects, a method for repairing furnaces having been obtained which can be performed by affecting only the eroded region and without a drastic temperature decrease.

The repairs can be performed in a relatively short time from the outside of said furnace and without damaging the intact refractory structures.

This repair allows, in addition to immediate restarting of production, to monitor the general state of wear of the tank 2, allowing to schedule subsequent repairs according to production requirements.

The invention is of course susceptible of numerous modifications and variations, all of which are within the scope of the same inventive concept.

The devices and the materials used may of course be replaced with other technically equivalent ones; the steps may furthermore be performed in a different sequence.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Method for repairing glass-melting furnaces, comprising the following steps:
a) unloading the molten glass at a temperature that is close to the melting temperature;
b) monitoring the inside of the furnace, keeping said furnace at a medium-to-high temperature to facilitate draining of the molten glass, possibly by means of suitable core holes for draining;
c) flushing the worn regions, with appropriate first nozzles, with sodium sulphate or other material that is adapted to melt the glass residues;
d) reducing the furnace temperature to 1150-1450°C;
e) localized cooling only of the eroded region or regions to be repaired;
f) where necessary, placement of refractory to delimit said eroded regions and closure of core holes for draining or of openings;
g) applying small contiguous layers of liquid rammed lining, with superimposition until said eroded regions to be repaired are levelled, with or without the addition of fragmented refractory having a preset fragment size;
h) restarting the furnace, brought to the melting temperature.

2. Method according to claim 1, characterized in that in order to repair internal lateral regions of said furnace one proceeds according to steps a), b), c) and d) mentioned above, followed by step f), which entails the positioning, on the inner wall of the furnace, in the eroded region, of a constantly cooled box-like support rimmed with ceramic fiber, followed by said steps g) and h).

3. Method for repairing furnaces, of the type comprising a first tank with a flat bottom from which a side wall extends, according to claim 1, characterized in that said step b) consists in performing said monitoring by inserting endoscopes through appropriate openings provided in said side wall.

4. Method according to claims 1 and 3, characterized in that said step b) consists in draining the furnace through one or more draining core holes formed at said eroded regions.

5. Method for repairing furnaces according to claims 1 and 4, characterized in that said flushing of said eroded regions occurs by inserting through said openings said first nozzles, and thereafter introducing material, such as sodium sulphate (Na₂SO₄) or other similar material, to lower the melting temperature of said glass, so as to increase its fluidity.

6. Method for repairing furnaces according to claims 1 and 5, characterized in that said cooling, performed in said step e), is achieved by means of said first nozzles, which deliver water or air, to said eroded regions which have a small size, preferably not larger than one square meter.

7. Method for repairing furnaces according to claims 1 and 6, characterized in that said step f) consists in, if said eroded regions are very deep, the formation of a core hole, which is then closed by inserting from outside cores made of refractory or appropriate plates.

8. Method for repairing furnaces according to claims 1 and 7, characterized in that said step g) consists in, while keeping the temperature inside the furnace at a medium-to-high value, applying, in said eroded regions, said liquid rammed lining by using at least one second nozzle.

9. Method for repairing furnaces according to claims 1 and 8, characterized in that said liquid rammed lining is applied in thin layers that are arranged by successive superimposition, preferably until levelling of said eroded regions is achieved.

10. Method for repairing furnaces according to claims 1 and 9, characterized in that said step g) consists in inserting, in said eroded regions, an amount of fragmented electro-cast refractory material that has a predefined fragment size, with subsequent application of said liquid rammed lining.

11. Method for repairing furnaces according to claims 1 and 10, characterized in that said fragment size of said fragmented electro-cast material is preferably comprised between two and six centimeters.

12. Method for repairing furnaces according to claims 1 and 2, characterized in that if said eroded region is located on said first side wall, said step f consists in positioning said box-like support, associated with said first nozzle, so as to insert it inside said furnace adjacent to said eroded region.

13. Method for repairing furnaces according to claims 1 and 12, characterized in that said cooled box-like support allows to contain said liquid rammed lining applied from the outside of said first side wall by using said second nozzles.

14. Method for repairing furnaces according to claims 1 and 13, characterized in that said box-like support has said perimetrically arranged rim of ceramic fiber that is adapted to ensure the tightness thereof with respect to said first side wall.

## Patentansprüche

1. Verfahren zum Reparieren von Glasschmelzöfen umfassend die folgenden Schritte:
a) Entladen der Glasschmelze bei einer Temperatur, die nahe bei der Schmelztemperatur liegt,
b) Überwachen des Ofeninneren, wobei der Ofen bei einer mittleren bis hohen Temperatur gehalten wird, um Abfluss der Glasschmelze zu erleichtern, gegebenenfalls mittels geeigneter Kernlöcher zum Abfliessen,
c) Spülen der geschädigten Bereiche mit geeigneten ersten Düsen mit Natriumsulfat oder anderem Material, das geeignet ist, die Glasreste zu schmelzen,
d) Reduzieren der Ofentemperatur auf 1150 bis 1450 °C,
e) örtliches Kühlen nur des oder der zu reparierenden erodierten Bereiche(s),
f) wo nötig, Einsetzen von feuerfestem Material, um die erodierten Bereiche zu begrenzen, und Schliessen von Kernlöchern für den Abfluss oder von Öffnungen,
g) Aufbringen von kleinen zusammenhängenden Schichten aus flüssiger Stampfauskleidung, mit Übereinanderschichtung, bis die zu reparierenden erodierten Bereiche ausgeglichen sind, mit oder ohne Zusatz von zerkleinertem feuerfestem Material einer bestimmten Fragmentgrösse,
h) erneutes Anfahren des auf die Schmelztemperatur gebrachten Ofens.

2. Verfahren nach Anspruch 1, dadurch gekennzeichnet, dass zum Reparieren innerer Seitenbereiche des Ofens gemäss der oben genannten Schritte a), b), c) und d) vorgegangen wird, gefolgt von Schritt f), der das Positionieren eines konstant gekühlten kastenartigen mit Keramikfaser umrandeten Trägers auf der Innenwand des Ofens im erodierten Bereich erforderlich macht, gefolgt von den Schritten g) und h).

3. Verfahren zum Reparieren von Öfen von der Art, die einen ersten Tank mit einem flachen Boden umfasst, aus dem sich eine Seitenwand erstreckt, nach Anspruch 1, dadurch gekennzeichnet, dass der Schritt b) im Durchführen der Überwachung durch Einführen von Endoskopen durch geeignete in der Seitenwand vorgesehene Öffnungen besteht.

4. Verfahren nach den Ansprüchen 1 und 3, dadurch gekennzeichnet, dass der Schritt b) im Ausfliessenlassen des Ofens durch ein oder mehrere Abflusskernlöcher besteht, die in den erodierten Bereichen ausgebildet sind.

5. Verfahren zum Reparieren von Öfen nach den Ansprüchen 1 und 4, dadurch gekennzeichnet, dass das Spülen der erodierten Bereiche durch Einsetzen der ersten Düsen durch die Öffnungen und danach Einführen von Material wie Natriumsulfat (Na₂SO₄) oder anderes ähnliches Material vorgenommen wird, um die Schmelztemperatur des Glases zu senken, um seine Fliessfähigkeit zu erhöhen.

6. Verfahren zum Reparieren von Öfen nach den Ansprüchen 1 und 5, dadurch gekennzeichnet, dass das in Schritt e) durchgeführte Kühlen mittels der ersten Düsen erreicht wird, die Wasser oder Luft in die erodierten Bereiche abgeben, die eine geringe Grösse aufweisen, bevorzugt nicht grösser als ein Quadratmeter sind.

7. Verfahren zum Reparieren von Öfen nach den Ansprüchen 1 und 6, dadurch gekennzeichnet, dass der Schritt f) in der Bildung eines Kernlochs besteht, wenn die erodierten Bereiche sehr tief sind, das dann durch Einsetzen von Kernen aus feuerfestem Material oder geeigneten Platten von aussen geschlossen wird.

8. Verfahren zum Reparieren von Öfen nach den Ansprüchen 1 und 7, dadurch gekennzeichnet, dass der Schritt g) im Aufbringen der flüssigen Stampfauskleidung in die erodierten Bereiche unter Verwendung mindestens einer zweiten Düse besteht, während die Temperatur im Ofen auf einem mittleren bis hohen Wert gehalten wird.

9. Verfahren zum Reparieren von Öfen nach den Ansprüchen 1 und 8, dadurch gekennzeichnet, dass die flüssige Stampfauskleidung in dünnen Schichten aufgebracht wird, die durch schrittweises Übereinanderschichten angeordnet werden, bevorzugt bis ein Ausgleichen der erodierten Bereiche erreicht ist.

10. Verfahren zum Reparieren von Öfen nach den Ansprüchen 1 und 9, dadurch gekennzeichnet, dass Schritt g) im Einsetzen einer Menge an zerkleinertem schmelzgeformtem feuerfestem Material in die erodierten Bereiche besteht, das eine vordefinierte Fragmentgrösse aufweist, mit anschliessendem Aufbringen der flüssigen Stampfauskleidung,

11. Verfahren zum Reparieren von Öfen nach den Ansprüchen 1 und 10, dadurch gekennzeichnet, dass die Fragmentgrösse des zerkleinerten schmelzgeformten Materials bevorzugt zwischen zwei und sechs Zentimetern liegt.

12. Verfahren zum Reparieren von Öfen nach den Ansprüchen 1 und 2, dadurch gekennzeichnet, dass, wenn der erodierte Bereich auf der ersten Seitenwand gelegen ist, der Schritt f) im Positionieren des mit der ersten Düse verbundenen kastenartigen Trägers besteht, um ihn in den Ofen benachbart zum erodierten Bereich einzusetzen.

13. Verfahren zum Reparieren von Öfen nach den Ansprüchen 1 und 12, dadurch gekennzeichnet, dass der gekühlte kastenartige Träger ermöglicht, die von der Aussenseite der ersten Seitenwand unter Verwendung der zweiten Düsen aufgebrachte flüssige Stampfauskleidung zu halten.

14. Verfahren zum Reparieren von Öfen nach den Ansprüchen 1 und 13, dadurch gekennzeichnet, dass der kastenartige Träger den im Umfang angeordneten Rand aus Keramikfaser aufweist, der geeignet ist, dessen Dichte in Bezug auf die erste Seitenwand zu gewährleisten.

## Revendications

1. Procédé pour réparer des fours de fusion de verre, comportant les étapes consistant à :
a) décharger le verre porté à fusion à une température qui est proche de la température de fusion,
b) surveiller l'intérieur du four, maintenir ledit four à une température moyenne-à-haute pour faciliter le drainage du verra porté à fusion, de manière possible par l'intermédiaire de trous à noyaux appropriés destinés au drainage,
c) rincer les zones usées, à l'aide de premières buses appropriées, avec du sulfate de sodium ou un autre matériau qui est adapté pour porter à fusion les résidus de verre,
d) réduire la température du four à 1150-1450°C,
e) effectuer un refroidissement localisé seulement de la zone érodée ou des zones érodées devant être réparées,
f) si nécessaire, placer un matériau réfractaire pour délimiter lesdites zones érodées, et fermer les trous à noyaux destinés au drainage, ou des ouvertures,
g) appliquer de petites couches adjacentes de revêtement liquide étalé, avec une superposition jusqu'à ce que lesdites zones érodées devant être réparées soient mises à niveau, avec ou sans l'ajout de matériau réfractaire fragmenté ayant une taille de fragments préétablie,
h) redémarrer le four, l'amener jusqu'à la température de fusion.

2. Procédé selon la revendication 1, caractérisé en ce que pour réparer les zones latérales intérieures dudit four, on procède selon les étapes a), b), c), et d) mentionnées ci-dessus, suivies de l'étape f), qui entraîne le positionnement, sur la paroi intérieure du four, dans la zone érodée, d'un support analogue à une boîte constamment refroidi, muni d'un bourrelet bordé de fibres de céramique, ce qui est suiti des étapes g) et h).

3. Procédé pour réparer des fours, du type comportant une première cuve ayant un fond plat à partir duquel s'étend une paroi latérale, selon la revendication 1, caractérisé en ce que ladite étape b) consiste à effectuer ladite surveillance en insérant des endoscopes à travers des ousertures appropriées agencées dans ladite paroi latérale.

4. Procédé selon les revendications 1 et 3, caractérisé en ce que ladite étape b) consista à drainer le four à travers un ou plusieurs trous à noyaux de drainage, formés au niveau desdites zones érodées.

5. procédé pour réparer des fours selon la revendication 1 et 4, caractérisé en ce que ledit rinçage desdites zones érodées est effectué en insérant lesdites premières buses à travers lesdites ouvertures, et après ceci en introduisant un matériau, tel que du sulfate de sodium (Na₂SO₄) ou un autre matériau similaire, pour abaisser la température de fusion dudit verre, de manière à augmenter sa fluidité.

6. Procédé pour réparer des fours selon les revendications 1 et 5, caractérisé en ce que ledit refroidissement, effectué dans ladite étape e), est réalisé par l'intermédiaire desdites premières buses, qui entoient de l'eau ou de l'air, vers lesdites zones érodées qui ont une petite taille, de préférence pas plus graade qu'un mètre carré.

7. Procédé pour réparer des fours salon les revendications 1 et 6, caractérisé en ce que ladite étape f) consiste à, si lesdites zones érodées sont très profondes, former un trou à noyau, qui est ensuite fermé en insérant à partir de 1'extérieur des noyaux constitués d'un matériau réfractaire ou de plaques appropriées.

8. Procédé pour réparer des fours selon les revendications 1 et 7, caractérisé en ce que ladite étape g) consiste, tout en maintenant la température à l'intérieur du four à une valeur moyenne-à-haute, à appliquer ledit revêtement liquide étalé dans lesdites. zones érodées en utilisant au moins une seconde buse.

9. Procédé pour réparer des fours selon les revendications 1 et 8, caractérisé en ce que ledit revêtement liquide étalé est appliqué en couches fines qui sont agencées par superposition successive, de préférence jusqu'à ce que la mise à niveau desdites zones érodées soit réalisée.

10. Procédé pour réparer des fours selon les revendications 1 et 9, caractérisé en ce que ladite étape g) consiste à insérer, dans lesdites zones érodées, une quantité de matériau réfractaire électrocoulé fragmenté qui a une taille de fragments prédéfinie, avec une application consécutive dudit revêtement liquide étalé.

11. Procédé pour réparer des fours selon les revendications 1 et 10, caractérisé en ce que ladite taille de fragments dudit matériau électro-coulé fragmenté est de préférence comprise entre deux et six centimètres.

12. Procédé pour réparer des fours selon les revendications 1 et 2, caractérisé en ce que si ladite zone érodée est positionnée sur ladite première paroi latérale, ladite étape f consiste à positionner ledit support analogue à une boîte, associé à ladite première buse, de manière à l'insérer à l'intérieur dudit four en étant adjacent à ladite zone érodée.

13. Procédé pour réparer des fours selon les revendications 1 et 12, caractérisé en ce que ledit support refroidi analogue à une boite permet de contenir ledit revêtement liquide étalé appliqué à partir de l'extérieur de ladite première paroi latérale en utilisant lesdites secondes buses.

14. Procédé pour réparer des fours selon les revendications 1 et 13, caractérisé en ce que ledit support analogue à une boite a ledit bourrelet de fibres de céramique agencé sur le périmètre, qui est adapté pour garantir l'étanchéité de celui-ci par rapport à ladite première paroi latérale.
